# FASCICULE DE BREVET EUROPEEN

(11) **EP 2 928 708 B1**
(45) Date de publication et mention de la délivrance du brevet: **06.02.2019**
(21) Numéro de dépôt: 13815045.3
(22) Date de dépôt: 04.12.2013
(51) Int. Cl.: B29D 30/54, B60C 9/02, B60C 9/18, B60C 9/20, B60C 11/02, B60C 99/00

(54) **PROCEDE DE RECHAPAGE D'UNE ENVELOPPE DE PNEUMATIQUE COMPRENANT UNE ETAPE DE CHAUFFAGE ET ENVELOPPE DE PNEUMATIQUE DE ROUE DE VÉHICULE**
VERFAHREN ZUR RUNDERNEUERUNG EINES REIFENS MIT EINEM SCHRITT ZUM ERWÄRMEN UND FAHRZEUGREIFENKARKASSE
METHOD FOR RETREADING A TYRE CASING COMPRISING A STEP OF HEATING AND VEHICLE WHEEL TYRE CASING

(30) Priorité: 04.12.2012 FR 1261610
(43) Date de publication de la demande: 14.10.2015
(73) Titulaire: Compagnie Générale des Etablissements Michelin, 63000 Clermont-Ferrand (FR)
(72) Inventeur: ASTIER, Cédric, F-63040 Clermont-Ferrand Cedex 9 (FR); MARCET, Grégory, F-63040 Clermont Ferrand Cedex 9 (FR)
(74) Mandataire: Redouté, Gilles Pierre
(86) Numéro de dépôt international: PCT/FR2013/052938
(87) Numéro de publication internationale: WO 2014/087101

(56) Documents cités:
- WO-A1-99/08860
- WO-A1-2011/073834
- WO-A1-2012/066415
- DE-A1-102011 001 877
- JP-A- H08 216 289
- JP-A- 2002 067 031
- US-A1- 2002 046 796
- US-A1- 2011 056 603

## Description

L'invention concerne le rechapage des pneumatiques de véhicule.

L'opération de rechapage consiste classiquement à éliminer la bande de roulement usée d'une enveloppe de pneumatique pour la remplacer par une bande de roulement neuve.

Le document WO2009139449 divulgue de doter le pneumatique d'une couche thermofusible ou plus généralement thermo-malléable reliant la bande de roulement à la carcasse. En vue du rechapage, on chauffe cette couche par rayonnement ou par contact pour la ramollir, ce qui permet d'ôter facilement la bande de roulement. On peut ensuite installer une nouvelle bande de roulement sur la carcasse.

Or il s'avère que le ramollissement de la couche thermofusible est long à obtenir et nécessite une grande quantité d'énergie. De plus, il arrive que ce chauffage engendre une surcuisson ou une recuisson de l'enveloppe ou de parties de l'enveloppe, ce qui nuit aux propriétés mécaniques de cette dernière.

Il est également connu du document WO 99/08860 de vulcaniser de la gomme crue de pneumatique par induction, lors de la confection de l'enveloppe.

Les documents JP 2002 067031 A et JP H08-216289 décrivent un procédé de rechapage d'une enveloppe de pneumatique dans lequel on utilise un inducteur pour chauffer une couche en élastomère.

Un but de l'invention est d'éviter ces inconvénients.

À cet effet, on prévoit selon la revendication 1 de l'invention un procédé de rechapage d'une enveloppe de pneumatique de roue, dans lequel :
- on chauffe par induction une enveloppe de pneumatique de roue de façon à ramollir une couche thermo-malléable située entre une bande de roulement de l'enveloppe et une carcasse de l'enveloppe,
- on élimine de la carcasse la bande de roulement, et
- on dépose une autre bande de roulement sur la carcasse.

Ainsi, le chauffage par induction permet de chauffer directement des éléments intérieurs de l'enveloppe. On chauffe donc plus rapidement la couche thermofusible et la quantité d'énergie nécessaire à cette fin est réduite. En outre, dans la plupart des cas, l'invention permet d'éviter de chauffer l'intégralité de l'enveloppe. Il devient donc plus facile de préserver les parties de l'enveloppe qui sont sensibles aux élévations de température.

De préférence, on effectue le chauffage au moyen d'un inducteur comprenant une spire unique.

Selon l'invention, on dispose un inducteur (16) de sorte qu'un plan principal de l'inducteur soit localement perpendiculaire à des éléments métalliques (15, 24) contenus dans l'enveloppe (2), les éléments métalliques étant choisis de façon à chauffer de façon préférentielle la couche thermo-malléable (14).

Ainsi, on cible plus précisément la zone de l'enveloppe à chauffer par induction. De plus, en choisissant l'orientation de l'inducteur, on favorise le chauffage de certains éléments plutôt que d'autres en fonction de leur orientation.

Dans un mode de mise en oeuvre, la couche thermo-malléable est interposée radialement entre la bande de roulement et une ceinture de renfort sommet formée d'une ou plusieurs couches de fils métalliques enrobés dans une composition de caoutchouc, parallèles entre eux et faisant un angle avec la direction circonférentielle du pneumatique, et on dispose un inducteur de sorte qu'un plan principal de l'inducteur est localement perpendiculaire à l'orientation des fils métalliques de la couche radialement externe de la ceinture de renfort.

Dans un autre mode de mise en oeuvre, la couche est interposée radialement entre la bande de roulement et une ceinture de renfort sommet formée d'une ou plusieurs couches de fils métalliques enrobés dans une composition de caoutchouc, parallèles entre eux et faisant un angle avec la direction circonférentielle du pneumatique, et on dispose un inducteur de sorte qu'un plan principal de l'inducteur est localement parallèle à l'orientation des fils métalliques de la couche radialement interne de la ceinture de renfort.

En effet, l'orientation de l'inducteur permet de sélectionner les éléments de l'enveloppe, en particulier les renforts métalliques, que l'on souhaite chauffer en priorité. Ainsi, plus l'angle entre l'inducteur et l'élément est grand, plus on augmente la perméabilité magnétique de ce dernier et plus les lignes de champ peuvent se boucler à travers l'élément. Ainsi, lorsque l'inducteur est perpendiculaire à l'élément, les lignes de champ sont parallèles à ce dernier. La perméabilité de l'élément est alors la plus grande possible et les lignes de champ se rebouclent au mieux dans cet élément. Inversement, quand l'inducteur est parallèle à l'élément, on obtient une perméabilité minimale car les lignes de champ doivent se boucler à travers l'élément et la gomme environnante voire les autres éléments environnants. On favorise donc dans ce cas le chauffage des éléments qui ne sont pas parallèles à l'inducteur dans cette position. Lorsque deux éléments forment un angle entre eux, il suffit de placer l'inducteur dans une position parallèle à celui que l'on souhaite chauffer le moins. L'autre forme alors un angle avec l'inducteur et chauffe davantage que celui qui lui est parallèle.

De préférence, on chauffe directement par induction des éléments de la couche ou en contact avec la couche.

Dans ce cas, on produit donc le chauffage directement au sein de la couche à ramollir ou sur celle-ci. On évite ainsi de chauffer ou de trop chauffer d'autres parties de l'enveloppe.

Avantageusement, au moins certains des éléments sont allongés suivant une direction localement non parallèle à des renforts métalliques de l'enveloppe.

On peut donc orienter l'inducteur de façon à chauffer ces éléments davantage que les renforts métalliques.

Par exemple, au moins certains des éléments s'étendent dans un plan radial à un axe principal de l'enveloppe.

Cette orientation est avantageuse car les renforts métalliques d'une enveloppe s'étendent le plus souvent dans des plans non radiaux à l'axe de l'enveloppe.

Dans un mode de réalisation, au moins certains des éléments forment des particules dispersées dans la couche.

On prévoit également selon l'invention une enveloppe de pneumatique de roue de véhicule, qui comprend :
- une carcasse,
- une bande de roulement et
- une couche située entre la carcasse et la bande de roulement, et comprenant un matériau apte à se ramollir à une température à laquelle la carcasse et la bande de roulement ne se ramollissent pas,
l'enveloppe comprenant des éléments aptes à être chauffés directement par induction et compris dans la couche ou en contact avec la couche.

Selon un mode de réalisation, les éléments aptes à être chauffés sont des éléments métalliques contenus dans la couche ou des éléments métalliques contenus dans une couche de chauffage en contact avec la couche.

L'enveloppe pourra alors présenter en outre au moins l'une quelconque des caractéristiques suivantes :
- au moins certains des éléments sont allongés ;
- au moins certains des éléments sont allongés suivant une direction localement non parallèle à des renforts métalliques de l'enveloppe, lorsque l'enveloppe contient également des renforts métalliques aptes à être chauffés et contenus dans une nappe de renfort ;
- au moins certains des éléments s'étendent dans un plan radial à un axe principal de l'enveloppe ; et
- au moins certains des éléments forment des particules dispersées dans la couche.

Dans un mode de réalisation, l'enveloppe est dépourvue de renfort métallique à distance de la couche.

Selon un mode de réalisation, les éléments aptes à être chauffés sont des renforts métalliques contenus dans une nappe de renfort.

Nous allons maintenant présenter un mode de réalisation de l'invention en référence aux dessins annexés sur lesquels :
- la figure 1 est une vue en perspective avec arrachement partiel d'une partie d'une enveloppe destinée à être rechapée au moyen du procédé de l'invention ;
- la figure 2 est une vue en élévation d'un inducteur utilisé dans le procédé de l'invention ;
- les figures 3 à 5 sont des vues de l'inducteur et de l'enveloppe lors de la mise en oeuvre du procédé de l'invention ;
- les figures 6 à 9 illustrent quatre orientations différentes de l'inducteur par rapport à des éléments de l'enveloppe lors de la mise en oeuvre du procédé ; et
- les figures 10 à 14 sont des courbes illustrant l'élévation de température dans l'enveloppe en fonction du temps lors de différentes modalités de mise en oeuvre du procédé de l'invention.

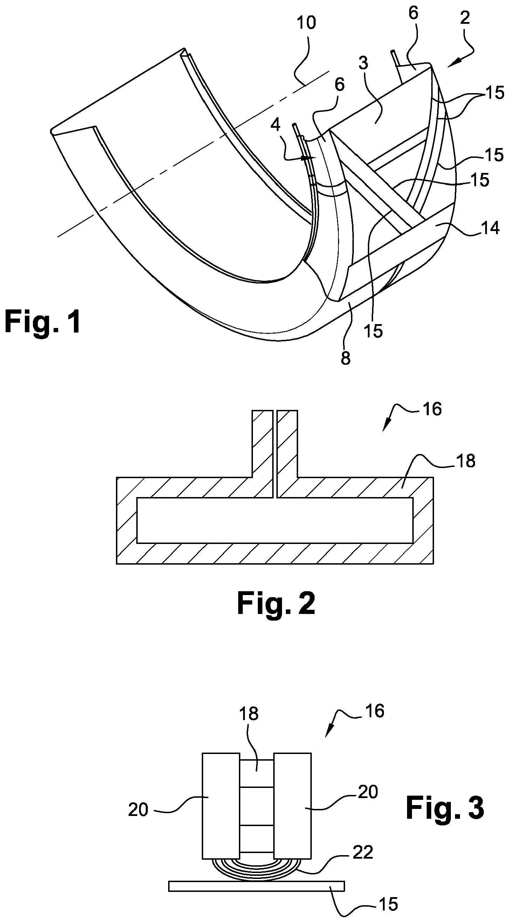

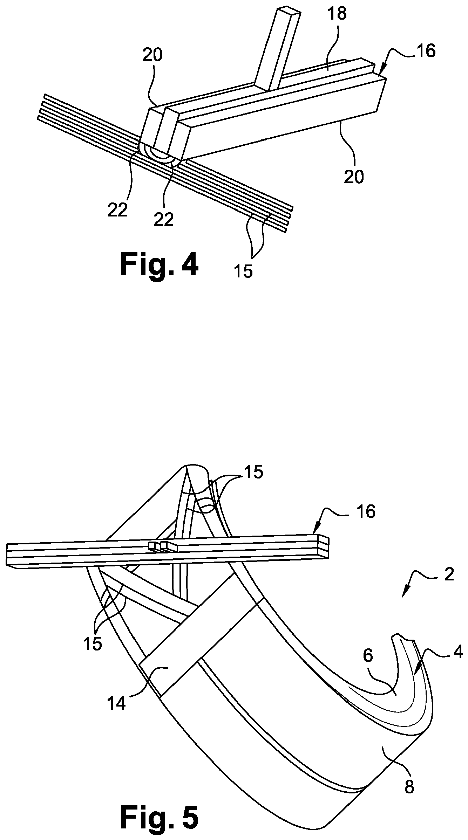

Nous allons décrire en référence aux figures 1 à 9 un mode de mise en oeuvre du procédé de l'invention. Ce procédé est appliqué à une enveloppe 2 d'un pneumatique de roue. Il peut s'agir d'une roue d'un véhicule de type léger, d'un véhicule utilitaire, d'un véhicule de type poids-lourd ou encore d'un engin de génie civil.

L'enveloppe 2 comprend une carcasse 4 dont la forme est sensiblement toroïdale, et comportant un sommet 3 dont la forme est voisine de celle d'un cylindre et deux flancs latéraux 6. L'enveloppe comprend également une bande de roulement 8 disposée sur la partie radialement externe du sommet. La bande de roulement présente, à l'origine, des sculptures sur sa face externe 12 mais celles-ci peuvent avoir disparu en partie ou en totalité en fonction du niveau d'usure de la bande.

De façon connue en elle-même, la stabilité du sommet est assurée par une ceinture formée par une ou plusieurs couches de fils métalliques 15, enrobés dans une composition de caoutchouc, parallèles entre eux, et faisant un angle avec la direction circonférentielle du pneumatique. Les fils 15 de la ceinture de renfort sommet peuvent former un angle nul avec la direction circonférentielle et on parle alors d'une nappe de frettage ou nappe à zéro degré, ou former un angle pouvant être usuellement compris entre 15° et 35°.

L'enveloppe comprend une couche d'interface 14 interposée suivant la direction radiale à l'axe 10 entre la carcasse 4 et la bande de roulement 8. En l'espèce, il s'agit d'une couche réalisée dans un matériau thermoplastique et thermofusible c'est-à-dire apte à se ramollir ou à fondre lorsqu'il est soumis à un chauffage jusqu'à atteindre une température prédéterminée caractéristique de ce matériau. Cette température est telle que la gomme de la carcasse et de la bande de roulement ne sont pas ramollies à cette température.

Pour la mise en oeuvre du procédé de l'invention, on utilise un inducteur 16 qui comprend de préférence une unique spire plane 18 réalisée dans un métal conducteur de l'électricité. De plus, la partie médiane de cette spire a une forme rectangulaire, les extrémités de la spire émergeant de la partie centrale d'un même côté longitudinal du rectangle.

Dans le présent exemple, l'inducteur 16 comprend en outre deux ferrites 20 formées par des plaquettes qui recouvrent les deux faces principales respectives opposées de la spire pour prendre cette dernière en sandwich entre les ferrites. Les ferrites permettent de canaliser les lignes de champ magnétique 22 qui ont été illustrées sur certaines des figures. Chacune de ces lignes forme une boucle fermée qui traverse la spire 18 perpendiculairement à son plan et s'échappe de l'inducteur par les extrémités des ferrites respectives.

Pour mettre en oeuvre le procédé de l'invention, on approche l'inducteur 16 de l'enveloppe 2 que l'on souhaite déchaper. Comme illustré aux figures 3 à 5, l'inducteur étant alimenté en courant électrique, on l'approche de l'enveloppe de façon à chauffer par induction localement certains au moins des fils métalliques 15. On dispose l'inducteur de sorte que son plan principal ne soit pas localement tangent à la bande de roulement. En fonction de l'orientation de l'inducteur, on procède ainsi au chauffage direct par induction de certains au moins des fils 15. La chaleur produite par effet Joule dans les fils 15 se transmet par conduction aux parties environnantes de l'enveloppe et en particulier à la couche intermédiaire 14 qui peut donc se ramollir. On déplace ensuite le pneumatique relativement à l'inducteur de façon à chauffer localement d'autres zones de la même couche 14. Lorsque celle-ci a été ramollie sur une surface suffisante, par exemple sur un tour complet autour de l'axe 10, on peut ôter la bande de roulement 8 par exemple par pelage. Ensuite, on dépose sur la carcasse ainsi libérée de la bande de roulement une couche de liaison puis une nouvelle bande de roulement. Cette dernière peut être en gomme crue et on procède alors à une cuisson de l'enveloppe pour vulcaniser la gomme de la bande de roulement.

Il a été mis en évidence que l'inducteur chauffe d'autant mieux les fils que l'angle formé par le plan de l'inducteur avec les fils est proche de 90°.

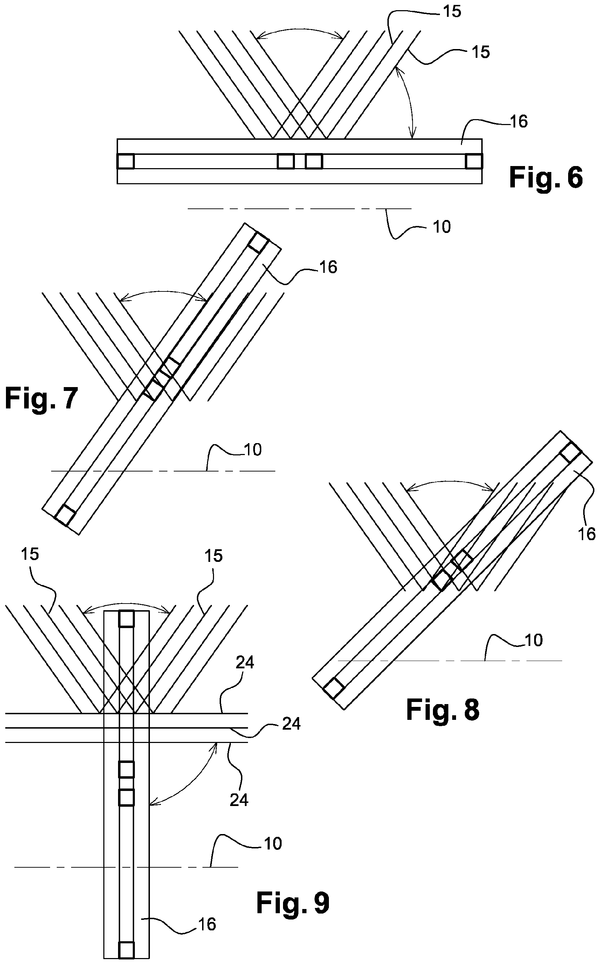

Ainsi, en référence à la figure 6, l'inducteur est incliné par rapport à chacun des groupes de renforts parallèles qui sont eux-mêmes inclinés entre eux. Dans cet exemple, l'inducteur est disposé de sorte que son plan est radial à l'axe 10. On génère donc de la chaleur directement dans les renforts 15 des deux groupes. Les deux nappes de renforts chauffent de la même façon par induction.

Toutefois cette disposition n'est pas particulièrement favorable en considérant qu'il est préjudiciable pour la résistance du pneumatique de chauffer excessivement les nappes formant la ceinture de renfort sommet, de manière à éviter de détruire les liaisons physico-chimiques entre la matrice élastomère et les fils.

Aussi, on orientera l'inducteur de manière à chauffer préférentiellement les fils situés radialement directement en contact avec la couche thermo-malléable 14. Dans une première configuration, on chauffera donc de manière préférentielle la nappe radialement externe de la ceinture ou, alternativement on orientera l'inducteur pour éviter de chauffer la nappe radialement interne de ladite ceinture.

Il également est tout à fait possible d'envisager de disposer une nappe de chauffage directement entre la ceinture sommet et la couche thermo-malléable 14.

Enfin, dans une dernière configuration on pourra disposer des fils métalliques directement dans la couche thermo-malléable 14 de manière à éviter de chauffer les nappes de la ceinture de renfort.

Dans l'exemple de la figure 7, l'orientation de l'inducteur est modifiée afin que son plan soit parallèle aux renforts 15 de l'un des deux groupes correspondant à la couche de fils de renfort de la ceinture sommet située radialement à l'intérieur. Il demeure donc incliné par rapport à ceux de l'autre groupe situé radialement plus à l'extérieur. Comme cette orientation est prononcée et proche de la perpendiculaire, il produit un chauffage particulièrement important dans les fils de renfort de la nappe radialement externe de la ceinture, tandis que le chauffage produit dans les autres renforts situés dans la partie radialement la plus interne de la ceinture est très faible en comparaison. Comme cela a été indiqué ci-dessus, les renforts fortement inclinés par rapport à l'inducteur sont particulièrement perméables aux lignes de champ magnétique alors que ceux qui sont parallèles à l'inducteur le sont particulièrement peu.

Dans l'exemple de la figure 8, on oriente l'inducteur de sorte que son plan soit perpendiculaire aux renforts 15 de l'un des groupes de préférence formant la nappe radialement externe de la ceinture sommet, et faiblement incliné par rapport à ceux de l'autre groupe. Cette orientation est donc optimale pour le chauffage des renforts du premier groupe. Comme précédemment, le chauffage des renforts de l'autre groupe est mauvais en comparaison.

Dans un autre mode de réalisation illustré à la figure 9, on peut prévoir de doter la couche 14 d'éléments métalliques 24 formés par exemple par des fils parallèles entre eux et s'étendant dans des plans radiaux à l'axe 10. De plus, ces fils sont inclinés par rapport aux renforts 15 dans la partie de l'enveloppe considérée. Par conséquent, si l'on dispose l'inducteur de sorte que son plan est perpendiculaire à l'axe 10, on peut chauffer de façon optimale par induction les fils 24 tout en chauffant modérément par induction les renforts 15. Puisque les fils 24 s'étendent dans la couche 14 elle-même, la chaleur générée lui est directement communiquée de sorte qu'elle se ramollit avant même qu'une grande quantité de cette chaleur soit transmise par conduction aux autres parties de l'enveloppe. Ce mode de réalisation permet donc d'éviter de trop chauffer les éléments de renfort et de trop les exposer au champ magnétique et aussi de préserver des élévations de température importantes les constituants de l'enveloppe qui en sont proches. De plus, les éléments 24 n'ayant pas de fonction mécanique de renfort dans l'enveloppe, il est possible de les disposer lors de la fabrication de l'enveloppe à l'endroit le plus propice, c'est-à-dire à l'endroit où l'on devra en priorité effectuer le chauffage lors de la mise en oeuvre du procédé de rechapage.

On peut prévoir de donner aux fils 24 une configuration et une orientation différentes de celles illustrées à la figure 9. Il est préférable cependant que ces fils ne soient pas localement parallèles aux renforts 15 afin qu'ils puissent être chauffés directement par induction sans trop chauffer les renforts 15 situés dans la même partie de l'enveloppe. On peut prévoir aussi que les éléments 24 sont contigus à la couche 14 mais pas inclus dans cette dernière.

En dernier lieu il convient de s'assurer que la densité des fils présents dans la couche 14 soit suffisante pour procurer une quantité de chaleur supérieure voire très supérieure à la densité de chaleur provenant des fils de la nappe de renfort. En effet, la quantité de chaleur produite par l'inducteur est, comme cela a déjà été évoqué, proportionnelle à l'inclinaison de l'inducteur, mais également proportionnelle au nombre de fils métalliques par unité de surface. Cette densité peut être relevée en diminuant le pas entre deux fils ou encore en augmentant le nombre de brins présents dans chacun des fils qui forment alors un câble. Il convient alors de régler par des essais successifs la densité optimale des fils insérés dans la couche thermo-malléable destinée à recevoir la part la plus importante du flux magnétique provenant de l'inducteur de manière à minimiser la part du flux allant chauffer les fils des nappes de renfort de la ceinture sommet.

On voit donc que le choix de l'orientation de l'inducteur par rapport à l'enveloppe permet de sélectionner les éléments à chauffer en priorité par induction.

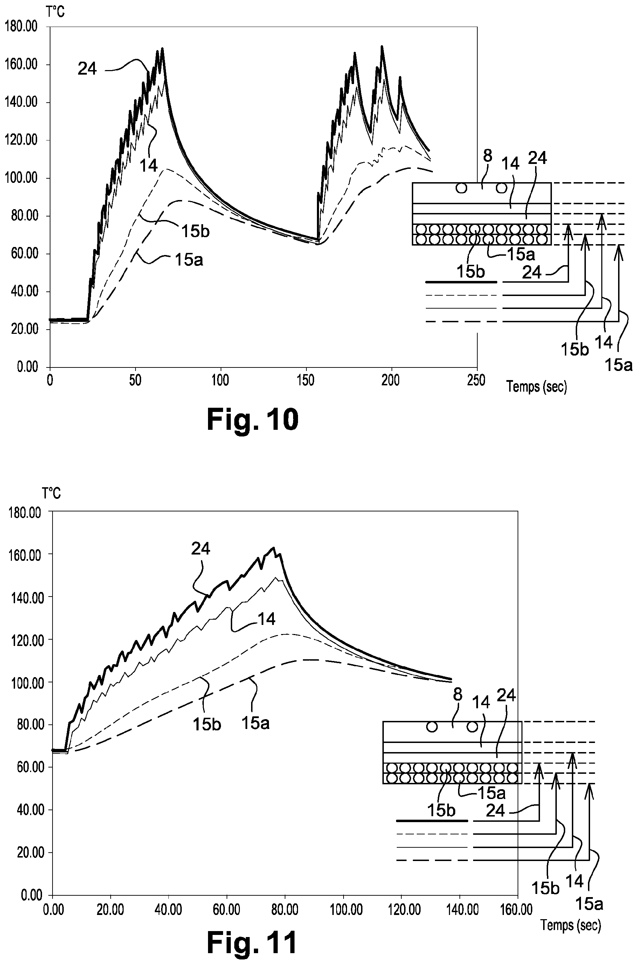

La figure 10 illustre l'évolution de la température dans différentes couches de l'enveloppe lors de la mise en oeuvre du procédé, en fonction du temps indiqué en abscisse. Comme illustré sur la vignette, on considère que l'enveloppe comprend notamment, dans cet ordre et de bas en haut, un empilement de renforts métalliques 15a, de renforts métalliques 15b, d'une couche de chauffage formée par les éléments 24, de la couche 14 et enfin de la bande de roulement 8, ces différentes couches étant contiguës les unes aux autres.

L'inducteur étant initialement à l'arrêt, la température des différentes couches est la température ambiante proche de 20°. On met ensuite en marche l'inducteur en l'alimentant en courant électrique. On constate que l'élévation de température est plus élevée dans les couches 14 et 24 que dans les couches 15a et 15b. En particulier, les valeurs mesurées sont plus élevées ainsi que la pente générale des courbes. Dans cet exemple, avant l'arrêt de l'inducteur, les couches 15a et 15b n'atteignent pas une température de 110° alors que les couches 14 et 24 ont atteint une température de 150°. Après l'arrêt de l'inducteur, le température de toutes les couches redescend pour se stabiliser de façon uniforme aux alentours de 70°. Lorsqu'on alimente à nouveau l'inducteur, les mêmes phénomènes que précédemment se produisent, y compris lorsqu'on active l'inducteur par intermittence. Dans cet exemple, les renforts 15a et 15b forment des angles respectivement de 25° et de -25° par rapport au plan médian du pneumatique perpendiculaire à l'axe 10.

On a illustré à la figure 11 les mêmes types de courbes en modifiant le niveau de puissance du courant de l'inducteur et la distance de ce dernier par rapport à l'enveloppe. Les températures et les pentes obtenues sont différentes mais on retrouve les mêmes comportements globaux que dans le cas de la figure 10. En particulier, la température obtenue est plus élevée dans les couches 14 et 24 que dans les couches de renforts 15a et 15b.

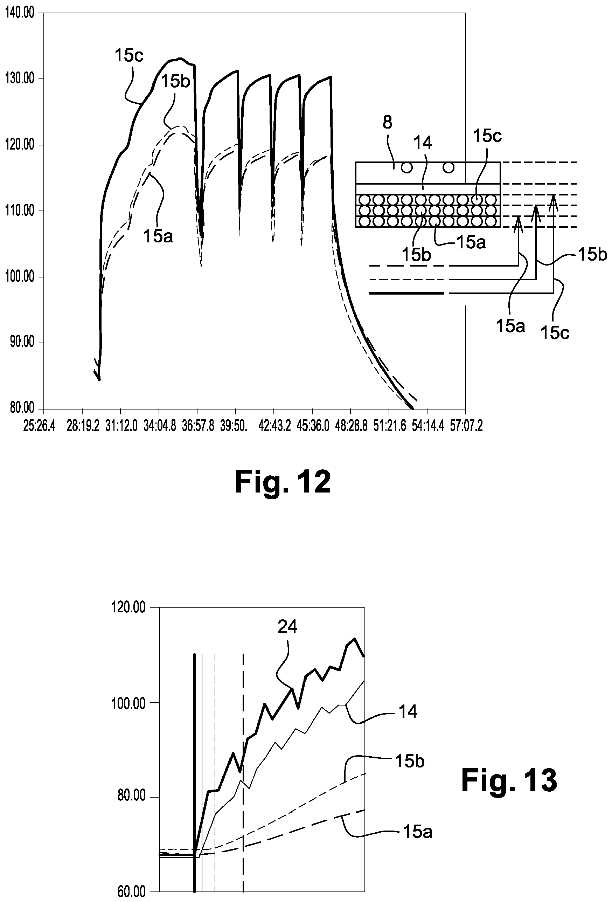

Des courbes analogues ont été illustrées à la figure 12. Cette fois, l'enveloppe comprend trois couches d'éléments de renfort 15a, 15b et 15c disposées de l'intérieur à l'extérieur de l'enveloppe dans cet ordre, la couche 15c étant contiguë à la couche 14. Les couches 15a, 15b sont telles que décrites précédemment. La couche 15c comprend des éléments de renfort métalliques s'étendant dans un plan perpendiculaire à l'axe 10 soit avec une orientation à 0°, c'est-à-dire circonférentielle. L'inducteur s'étendant dans un plan radial à l'axe, on provoque une montée en température plus importante et plus rapide dans la couche 15c, et donc dans la couche 14, que dans les deux autres couches, comme précédemment, y compris avec un chauffage par intermittence.

En faisant varier le temps de montée en température, on parvient à faire varier l'écart de température entre les nappes de renforts métalliques et la couche 14 et ses éléments chauffants 24. En effet, en présence d'un mauvais conducteur thermique tel que le caoutchouc formant la gomme, on a la possibilité d'augmenter très rapidement la température localement au niveau de l'élément directement chauffé par induction alors que la matière environnante n'a pas le temps de chauffer. Par conséquent, plus la puissance fournie est élevée, plus l'énergie fournie est faible et moins la matière à proximité de l'élément chauffé monte en température. On peut en tenir compte pour mieux atteindre la température cible.

On a illustré à la figure 13 une vue à plus grande échelle du début des courbes de la figure 11 qui met en valeur cet effet de retard. Les courbes montrent un retard de montée en température qui est d'autant plus grand que le point de mesure est éloigné de la zone chauffante.

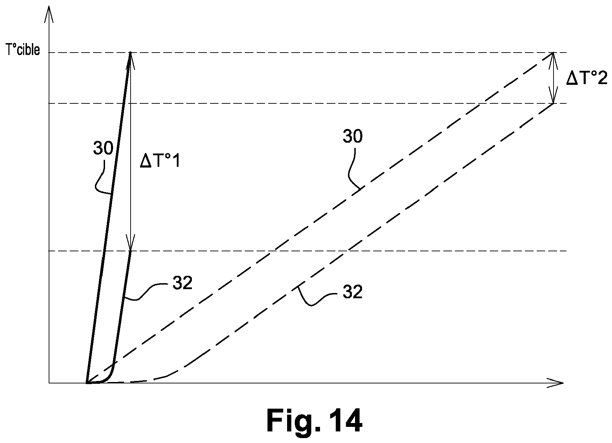

Pour mieux visualiser encore ce phénomène, on a extrapolé ces courbes sur la figure 14. Dans les deux cas considérés respectivement en traits pleins et en traits pointillés, la courbe 30 illustre la température de la couche chauffante tandis que la courbe 32 illustre la température d'une couche éloignée de cette dernière et chauffée par conduction. On observe que la vitesse de montée en température est d'autant plus élevée que l'écart de température entre les courbes est lui-même important. On peut donc se servir de l'inclinaison de la courbe et du temps de montée en température pour mieux atteindre la température cible au niveau de la couche de liaison 14 à chauffer sans trop chauffer les autres couches. Dans une variante du procédé, on peut chauffer l'enveloppe par induction après que la bande de roulement a été ôtée afin de faciliter l'adhésion de la nouvelle bande de roulement à la carcasse sur la couche 14.

Bien entendu, on pourra apporter à l'invention de nombreuses modifications sans sortir du cadre de celle-ci.

## Revendications

1. Procédé de rechapage d'une enveloppe (2) de pneumatique de roue **caractérisé en ce que** :
- on dispose un inducteur (16) de sorte qu'un plan principal de l'inducteur soit localement perpendiculaire à des éléments métalliques (15, 24) contenus dans l'enveloppe (2), lesdits éléments métalliques étant choisis de façon à chauffer de façon préférentielle une couche thermo-malléable (14) située entre une bande de roulement (8) de l'enveloppe et une carcasse (4) de l'enveloppe ;
- on chauffe par induction une enveloppe de pneumatique de roue de façon à ramollir la couche thermo-malléable (14),
- on élimine de la carcasse la bande de roulement, et
- on dépose une autre bande de roulement sur la carcasse.

2. Procédé selon la revendication précédente dans lequel on effectue le chauffage au moyen d'un inducteur (16) comprenant une spire unique (18).

3. Procédé selon l'une des revendications 1 ou 2 dans lequel la couche thermo-malléable (14) est interposée radialement entre la bande de roulement et une ceinture de renfort sommet formée d'une ou plusieurs couches de fils métalliques enrobés dans une composition de caoutchouc, parallèles entre eux et faisant un angle avec la direction circonférentielle du pneumatique et dans lequel on dispose un inducteur (16) de sorte qu'un plan principal de l'inducteur est localement perpendiculaire à l'orientation des fils métalliques de la couche radialement externe de la ceinture de renfort.

4. Procédé selon l'une des revendications 1 ou 2 dans lequel la couche (14) est interposée radialement entre la bande de roulement et une ceinture de renfort sommet formée d'une ou plusieurs couches de fils métalliques enrobés dans une composition de caoutchouc, parallèles entre eux et faisant un angle avec la direction circonférentielle du pneumatique et dans lequel on dispose un inducteur de sorte qu'un plan principal de l'inducteur est localement parallèle à l'orientation des fils métalliques (15) de la couche radialement interne de la ceinture de renfort.

5. Procédé selon au moins l'une quelconque des revendications précédentes dans lequel on chauffe directement par induction des éléments (24) de la couche ou en contact avec la couche.

6. Procédé selon la revendication précédente dans lequel au moins certains des éléments (24) sont allongés suivant une direction localement non parallèle à des renforts métalliques de l'enveloppe.

7. Procédé selon au moins l'une quelconque des revendications 5 et 6 dans lequel au moins certains des éléments (24) s'étendent dans un plan radial à un axe principal de l'enveloppe.

8. Enveloppe (2) de pneumatique de roue de véhicule, qui comprend :
- une carcasse (4),
- une bande de roulement (8) et
- une couche (14) située entre la carcasse et la bande de roulement, et comprenant un matériau apte à se ramollir à une température à laquelle la carcasse et la bande de roulement ne se ramollissent pas,
l'enveloppe comprenant des éléments (24, 15) aptes à être chauffés directement par induction,
**caractérisée en ce que** ces éléments (24, 15) sont compris dans la couche ou en contact avec la couche.

9. Enveloppe (2) selon la revendication 8, dans laquelle les éléments aptes à être chauffés sont des éléments métalliques (24) contenus dans la couche (14) ou des éléments métalliques (24) contenus dans une couche de chauffage en contact avec la couche (14).

10. Enveloppe selon la revendication précédente dans laquelle au moins certains des éléments (24) sont allongés.

11. Enveloppe selon au moins l'une quelconque des revendications 9 et 10 dans laquelle au moins certains des éléments (24) s'étendent dans un plan radial à un axe principal de l'enveloppe.

12. Enveloppe selon au moins l'une quelconque des revendications 9 à 11, dépourvue de renfort métallique à distance de la couche.

13. Enveloppe (2) selon l'une des revendications 9 à 11, contenant également des renforts métalliques (15) aptes à être chauffés et contenus dans une nappe de renfort, et dans laquelle au moins certains des éléments (24) sont allongés suivant une direction localement non parallèle aux renforts métalliques (15) de l'enveloppe.

14. Enveloppe (2) selon la revendication 8, dans laquelle les éléments aptes à être chauffés sont des renforts métalliques (15) contenus dans une nappe de renfort.

## Patentansprüche

1. Verfahren zur Runderneuerung eines Radreifenmantels (2), **dadurch gekennzeichnet, dass**:
- ein Induktor (16) derart angeordnet wird, dass eine Hauptebene des Induktors lokal rechtwinklig zu Metallelementen (15, 24) ist, die in dem Mantel (2) enthalten sind, wobei die Metallelemente derart ausgewählt werden, dass sie vorzugsweise eine wärmeverformbare Schicht (14) erwärmen, die zwischen einer Lauffläche (8) des Mantels und einer Karkasse (4) des Mantels angeordnet ist;
- durch Induktion ein Radreifenmantel derart erwärmt wird, dass die wärmeverformbare Schicht (14) erweicht wird;
- die Lauffläche von der Karkasse abgenommen wird; und
- eine andere Lauffläche auf der Karkasse aufgebracht wird.

2. Verfahren nach dem vorhergehenden Anspruch,
wobei das Erwärmen mit einem Induktor (16) durchgeführt wird, der eine einzige Windung (18) umfasst.

3. Verfahren nach einem der Ansprüche 1 oder 2,
wobei die wärmeverformbare Schicht (14) radial zwischen der Lauffläche und einem Scheitelverstärkungsgürtel angeordnet wird, der aus einer oder mehreren Schichten von Metalldrähten gebildet ist, die mit einer Kautschukzusammensetzung umhüllt sind, zueinander parallel sind und einen Winkel mit der Umfangsrichtung des Reifens bilden, und wobei ein Induktor (16) derart angeordnet wird, dass eine Hauptebene des Induktors lokal rechtwinklig zur Ausrichtung der Metalldrähte der Schicht radial außerhalb des Verstärkungsgürtels ist.

4. Verfahren nach einem der Ansprüche 1 oder 2,
wobei die Schicht (14) radial zwischen der Lauffläche und einem Scheitelverstärkungsgürtel angeordnet wird, der aus einer oder mehreren Schichten von Metalldrähten gebildet ist, die mit einer Kautschukzusammensetzung umhüllt sind, zueinander parallel sind und einen Winkel mit der Umfangsrichtung des Reifens bilden, und wobei ein Induktor derart angeordnet wird, dass eine Hauptebene des Induktors lokal parallel zur Ausrichtung der Metalldrähte (15) der Schicht radial innerhalb des Verstärkungsgürtels ist.

5. Verfahren nach mindestens einem der vorhergehenden Ansprüche,
wobei Elemente (24) der Schicht oder in Kontakt mit der Schicht direkt durch Induktion erwärmt werden.

6. Verfahren nach dem vorhergehenden Anspruch,
wobei sich mindestens einige der Elemente (24) in einer Richtung lokal nicht parallel zu den Metallverstärkungen des Mantels länglich erstrecken.

7. Verfahren nach mindestens einem der Ansprüche 5 und 6,
wobei sich mindestens einige der Elemente (24) in einer Ebene radial zu einer Hauptachse des Mantels erstrecken.

8. Mantel (2) eines Fahrzeugradreifens, umfassend:
- eine Karkasse (4),
- eine Lauffläche (8), und
- eine Schicht (14), die zwischen der Karkasse und der Lauffläche angeordnet ist und ein Material umfasst, das geeignet ist, sich bei einer Temperatur zu erweichen, bei der sich die Karkasse und die Lauffläche nicht erweichen,
wobei der Mantel Elemente (24, 15) umfasst, die geeignet sind, direkt durch Induktion erwärmt zu werden,
**dadurch gekennzeichnet, dass** diese Elemente (24, 15) in der Schicht oder in Kontakt mit der Schicht enthalten sind.

9. Mantel (2) nach Anspruch 8,
wobei die Elemente, die geeignet sind, erwärmt zu werden, Metallelemente (24) sind, die in der Schicht (14) enthalten sind, oder Metallelemente (24), die in einer Erwärmungsschicht in Kontakt mit der Schicht (14) enthalten sind.

10. Mantel nach dem vorhergehenden Anspruch,
wobei sich mindestens einige der Elemente (24) länglich erstrecken.

11. Mantel nach mindestens einem der Ansprüche 9 bis 10,
wobei sich mindestens einige der Elemente (24) in einer Ebene radial zu einer Hauptachse des Mantels erstrecken.

12. Mantel nach mindestens einem der Ansprüche 9 bis 11,
ohne Metallverstärkung in einer Distanz von der Schicht.

13. Mantel (2) nach einem der Ansprüche 9 bis 11, welcher ebenso Metallverstärkungen (15) enthält, die geeignet sind, erwärmt zu werden, und in einer Verstärkungsmatte enthalten sind, und wobei sich mindestens einige der Elemente (24) in einer Richtung lokal nicht parallel zu den Metallverstärkungen (15) des Mantels länglich erstrecken

14. Mantel (2) nach Anspruch 8,
wobei die Elemente, die geeignet sind, erwärmt zu werden, Metallverstärkungen (15) sind, die in einer Verstärkungsmatte enthalten sind.

## Claims

1. Method for retreading a wheel tyre casing (2), **characterized in that**:
- an inductor (16) is arranged so that a main plane of the inductor is locally perpendicular to metal elements (15, 24) contained inside the casing (2), the said metal elements being chosen so as to heat in a preferential manner a heat-malleable layer (14) situated between a tread (8) of the casing and a carcass (4) of the casing;
- a wheel tyre casing is heated by means of induction so as to soften the heat-malleable layer (14);
- the tread is eliminated from the carcass; and
- another tread is deposited on the carcass.

2. Method according to the preceding claim, wherein heating is performed by means of an inductor (16) comprising a single winding (18).

3. Method according to one of Claims 1 or 2, wherein the heat-malleable layer (14) is arranged radially between the tread and a top reinforcing belt formed by one or more layers of metal wires which are coated with a rubber compound, are parallel to each other and form an angle with the circumferential direction of the tyre and wherein an inductor (16) is arranged so that a main plane of the inductor is locally perpendicular to the orientation of the metal wires of the radially outer layer of the reinforcing belt.

4. Method according to one of Claims 1 or 2, wherein the layer (14) is arranged radially between the tread and a top reinforcing belt formed by one or more layers of metal wires which are coated with a rubber composition, are parallel to each other and form an angle with the circumferential direction of the tyre and wherein an inductor is arranged so that a main plane of the inductor is locally parallel to the orientation of the metal wires (15) of the radially inner layer of the reinforcing belt.

5. Method according to at least any one of the preceding claims, wherein elements (24) forming part of the layer or in contact with the layer are heated directly by means induction.

6. Method according to the preceding claim, wherein at least some of the elements (24) are elongated in a direction locally not parallel to metal reinforcements of the casing.

7. Method according to at least any one of Claims 5 and 6, wherein at least some of the elements (24) extend in a plane radial to a main axis of the casing.

8. Vehicle wheel tyre casing (2) which comprises:
- a carcass (4)
- a tread (8) and
- layer (14) situated between the carcass and the tread and comprising a material suitable for being softened at a temperature at which the carcass and the tread are not softened,
the casing comprising elements (24, 15) suitable for being heated directly by means of induction, **characterized in that** these elements (24, 15) are contained inside the layer or are in contact with the layer.

9. Casing (2) according to Claim 8, wherein the elements suitable for being heated are metal elements (24) contained inside the layer (14) or metal elements (24) contained inside a heating layer in contact with the layer (14).

10. Casing according to the preceding claim, wherein at least some of the elements (24) are elongated.

11. Casing according to at least any one of Claims 9 and 10, wherein at least some of the elements (24) extend in a plane radial to a main axis of the casing.

12. Casing according to at least any one of Claims 9 to 11, which is devoid of metal reinforcement at a distance from the layer.

13. Casing (2) according to one of Claims 9 to 11, also containing metal reinforcements (15) suitable for being heated and contained in a reinforcing ply and wherein at least some of the elements (24) are elongated along a direction locally not parallel to the metal reinforcements (15) of the casing.

14. Casing (2) according to Claim 8, wherein the elements suitable for being heated are metal reinforcements (15) contained in a reinforcing ply.
